# EUROPEAN PATENT APPLICATION

(11) **EP 4 786 379 A1**
(43) Date of publication of application: **05.08.2026**
(21) Application number: 25154599.2
(22) Date of filing: 29.01.2025
(51) Int. Cl.: B65G 7/06, B65G 67/20

(54) **PRESSURE CUSHION LOADING SYSTEM**

(71) Applicant: KB Intellectual Property GmbH & Co. KG, 82049 Pullach (DE)
(72) Inventor: MACKE, Wlodzimierz, 17321 Löcknitz (DE); SCHMIEDT, Stefan, 82387 Antdorf (DE); BINDER, Klaus, 83112 Frasdorf (DE)

(57) **Abstract**

The present invention refers to a pressure cushion loading system (1), comprising at least one pressure cushion element (8), at least one platform module (2) configured to receive transportation loads, at least one supply connection means (3) configured to provide pressurized fluid to the at least one air cushion element (8) and at least one control unit (4), wherein the control unit (4) is configured to control a fluid pressure within the at least one cushion element (8) such that the system (1) is capable of carrying transportation loads over at least one gap within the ground. Moreover, the present invention refers to a method for use of such a pressure cushion loading system (1).

## Description

The present invention relates to a pressure cushion loading system, in particular an air cushion loading system, and a method for use of such a system.

In many industries, particularly logistics and manufacturing, the time required to load and unload goods onto trucks or other utility/transportation vehicles can be a significant bottleneck.

Conventional methods, such as the use of forklifts or conveyor belts, are time-consuming and often require substantial manual labor. These methods may also involve high friction between the goods and the loading surface, increasing the risk of damage to delicate, fragile or heavy items.

To overcome these challenges various air cushion-based systems have been proposed, wherein a transportation load is placed on a platform supported by air cushions that minimize friction and allow for smoother, faster movement.

However, existing solutions often lack flexibility, especially when gaps or uneven surfaces are present between the vehicle and the loading dock. Furthermore, many of the current systems lack modularity, limiting their adaptability to different load sizes and transport requirements.

The object of the invention is to provide a pressure cushion loading system which comprises flexibility and which is cost-efficient by also being capable of bridging gaps and uneven surfaces along the ground while minimizing the labor and time required for loading and unloading of utility/transportation vehicles.

These objectives are resolved by a system according to independent claim 1 and by a method according to independent claim 9. Preferred embodiments are addressed by the dependent claims respectively.

According to the present invention a pressure cushion loading system, preferably an air cushion loading system, in particular for use with a utility/transportation vehicle, is provided, comprising:
- at least one pressure cushion element, in particular air cushion element;
- at least one platform module configured to receive transportation loads, wherein the at least one platform module is supported by the at least one pressure cushion element;
- at least one supply connection means configured to provide/forward pressurized/compressed fluid, in particular pressurized/compressed air, to the at least one pressure cushion element;
- at least one control unit,
wherein the control unit is configured to control and/or regulate a fluid pressure within the at least one pressure cushion element, preferably by controlling and/or regulating the supply connection means, such that the system is capable of carrying transportation loads over at least one gap within the ground.

The invention is based on the idea that specific control of the pressure within a single or multiple pressure cushion elements allows for bridging and crossing uneven surfaces along the ground along which a (transportation) load has to be carried and transported. In particular, by specifically allowing and limiting a decrease of fluid pressure within certain pressure cushion elements, the transportation load can still be carried by the associated platform module due to the remaining pressure cushion elements maintaining their fluid pressure, preferably a pneumatic pressure.

The pressure cushion loading system further has the technical effect of reducing friction during the loading and unloading process. It facilitates moving of heavy transportation goods while bridging gaps between the loading dock and the utility vehicle, thereby reducing time and manual labor while ensuring stable handling across uneven surfaces.

Within the context of the disclosure, a pressure cushion loading system is a system that uses hydraulically or pneumatically pressurized cushion elements to support and transport loads by reducing friction between the load and the ground. Examples of technical implementations include air cushion platforms used in logistics and transportation, as well as hovercraft-based systems that use air to move loads across smooth surfaces.

Moreover, besides air further pressure fluids can be used in the context of the present invention, preferably gaseous fluids like nitrogen or the like. Furthermore, it may also be possible to use liquid fluids like water or the like.

Thereby, a pressure cushion platform, like an air cushion loading platform, is a platform supported by pressure cushions to allow easy and efficient loading and unloading of goods, with examples including warehouse loading platforms with e.g. integrated air cushions or transport platforms used in automated logistics systems.

Within the context of the present invention, platform modules refer to a modular unit designed to hold transportation loads and is supported by air cushion elements. Several, at least two, platform modules can be interconnectable to form one pressure/air cushion loading system, in particular to form one larger pressure/air cushion loading platform.

Moreover, within the context of the present invention, transportation loads refer to any items, goods, or cargo intended for transport, such as industrial goods, machinery, or standard shipping containers. The pressure cushion loading system, comprising at least one platform module, can be adaptable to the size of the transportation loads in modular manner so that it fits onto the loading surface of a utility vehicle like e.g. truck or a truck-trailer combination.

In the context of the present invention, a pressure cushion element, like an air cushion element, is a component that creates a layer of fluid/air to reduce friction and support the platform module. Examples may include air bladders that expand to lift the platform element or air chambers that distribute pressure across the base of the platform element.

The pressure cushion elements can comprise different shapes, preferably oval, circular and/or essentially rectangular shapes in order to support the associated platform module.

Within the context of the present invention, the supply connection means refers to components that provide, forward as well as may allow to control and/or regulate delivery of pressurized/compressed fluids, like air, to the pressure cushion elements, such as connectors for air compressors providing pressurized/compressed air or (hydraulic/pneumatic) valves that are capable of controlling the fluid flow. In particular, the supply connection means can provide a connection to an internal/external pressurized fluid supply source, like e.g. a reservoir or a compressor, either directly or in combination with an additional fluid connection line.

In particular, the supply connection means, like a fluid connection being connected to an internal/external pressurized fluid supply source of the system, can comprise/be provided with a control valve for the at least one pressure cushion element, preferably for each pressure cushion element, in order to allow temporary disconnection from the pressurized fluid supply source in case of a pressure drop within the respective pressure cushion element and to allow for (re-)connection with the pressurized fluid supply source if the respective pressure cushion element shall be inflated with pressurized/compressed fluid.

Moreover, a platform module can be provided with one or multiple supply connection means. Thus, multiple pressure cushion elements can be provided with pressurized fluid via a single, common supply connection means. Alternatively, each pressure cushion element can comprise an individual supply connection means, whereby such multiple supply connection means may preferably be connected with each other via at least one (pressurized fluid) source connection line. In case of multiple platform modules, each platform module preferably comprises at least one supply connection means.

In the sense of the present invention, a control unit can be understood as a device that controls and/or regulates the fluid pressure in the at least one pressure cushion element, with examples including electronic controllers, like electronic control units (ECU) that adjust fluid/air pressure, or programmable control systems used for automated (transportation) load handling.

In particular, the control unit can control and/or regulate the pressure cushion loading system on basis of sensor feedback. For example, pressure sensors or flow sensor may be provided in this context for each of the pressure cushion elements or for a combined set of pressure cushion elements, whereby such combined set allows for interrelated prediction of fluid pressure losses of a single cushion element of the combined set by the control unit. Moreover, also location sensors, like GPS sensors, magnetic loops along a warehouse area or the like, may be provided to allow for a predictive control and/or regulation of the pressure cushion loading system in accordance with its respective position within such area.

The term (fluid) pressure in the context of the present invention refers to the force exerted by the pressure fluid, e.g. the pressurized/compressed air, in the pressure cushion element to lift and support the (transportation) load.

Within the context of the present invention, a gap can be any physical unevenness and/or separation in/along the ground on which a (transportation) load shall be transported and moved, including the space between a loading dock and a truck.

In one preferred embodiment, the at least one pressure cushion element comprises at least one pressure reduction means, in particular a pressure reduction valve.

Preferably, each of multiple pressure cushion elements is provided with a pressure reduction means.

The pressure reduction means may ensure that the system operates at safe and/or optimal pressure levels. This prevents over-pressurization of the pressure cushion elements, which could lead to system instability or damage during the loading process, especially when crossing over gaps within the ground or between a loading dock and a truck.

Within the context of the present invention, a pressure reduction means can be a component that may allow for controlling/regulating and may reduce the fluid pressure within the system, namely with at least one pressure cushion element. Examples may include devices such as pressure reducing valves, which are capable of controlling the air pressure to prevent over-inflation, and pressure regulators, which maintain the system pressure at a safe and consistent level by being independently or automatically controlled by the control unit.

In a further embodiment, the control unit is configured to control, e.g. decrease or increase, the fluid pressure until the at least one pressure cushion element reaches a minimum or maximum fluid pressure threshold, in particular a pre-determinable minimum or maximum fluid pressure threshold, even more preferably a pre-determinable minimum or maximum fluid pressure threshold according to/depending on a respective (transportation) load weight and/or load weight distribution along the at least one platform module.

Such minimum or maximum fluid pressure thresholds can be provided as discrete values or in form of minimum/maximum ranges, e.g. being further assigned with a preferred (mean) value of such minimum/maximum range.

This allows the system to maintain stability by lowering the pressure in the pressure/air cushion element when necessary. Further, this ensures that the pressure/air cushion element does not collapse but provides minimal support during certain phases, such as when crossing gaps or uneven surface areas along the ground floor. Moreover, this also allows the system to handle heavier loads or ensure stability when navigating difficult surfaces. It further prevents over-pressurization while maximizing the air cushion's load-bearing capability.

In the context of the present invention a minimum fluid pressure threshold can be understood as the lowest fluid pressure at which the pressure cushion element can still maintain its support function for the associated platform module. This includes deflating the pressure/air cushion element completely if this is necessary for overcrossing the gap.

Moreover, a maximum fluid pressure threshold can be understood as the highest allowable fluid pressure within the pressure cushion element. This includes inflating the pressure cushion element completely if this is necessary for crossing a gap along the ground.

A particularly necessary minimum fluid pressure or a corresponding maximum fluid pressure is dependent on the configuration of the respective pressure cushion element, e.g. a diameter of a cylindrically shaped pressure cushion element. In more detail, cylindrically shaped pressure cushion elements with smaller diameter will necessitate a higher fluid pressure to be able to carry a certain load.

Moreover, in usual storage facilities corresponding fluid pressure systems, in particular compressed air systems, can provide a typical fluid pressure of 6 bar.

Additionally or alternatively, fluid pressures up to 15 bar can be provided in (storage) facilities according to other standardized compressed air systems. Thus, the pressure cushion loading system and the at least one pressure cushion element may be configured to operate and withstand on such a maximum fluid pressure up to 15 bar.

According to another alternative or additionally, the pressure cushion loading system may be configured to and suitable for being used in combination with fluid pressure systems being able to provide fluid pressures up to 12 bar, preferably up to 10 bar, like fluid pressure systems of utility/transportation vehicles, e.g. trucks, or mobile fluid compressors. Thus, the system according to the present invention may be used even in remote locations, e.g. storage facilities with minor infrastructure, by utilizing the corresponding utility vehicle or a mobile/portable compressor as pressurized/pressure fluid source.

In the context of the present invention, typical minimum and maximum fluid pressures, e.g. air pressures, can preferably be within a range of 0.1 to 15 bar, more preferably within a range of 0.1 to 12 bar, even more preferably within a range of 0.1 to 10 bar, even more preferably within a range of 0.1 to 6 bar.

Moreover, it is also possible that the present invention can be operated within lower or higher fluid pressure ranges, i.e. hydraulic or pneumatic pressures ranges.

The maximum and minimum fluid pressure thresholds enable the system to cross and carry loads across gaps, like uneven ground surfaces or between a loading dock and a truck or a corresponding trailer, by increasing pressure within certain pressure cushion elements positioned before or beyond the gap and decreasing, in particular allowing for a decrease of, fluid pressure within pressure cushion elements that hover over/are positioned above the gap.

In an embodiment, the pressure cushion loading system comprises at least two platform modules, each comprising at least one connection means, preferably a mechanical connection means, configured to detachably connect at least two platform modules to each other.

The mechanical connection means allow for the modular assembly and disassembly of multiple platform modules, providing flexibility in configuring the system based on different load sizes and adapting so that it fits onto the loading surface of a truck or a truck-trailer combination.

In the context of the present invention a mechanical connection means can be provided as a mechanism that physically connects two or more platform modules. For example, such mechanical connection means can be provided in form of locking mechanisms that secure the platform modules together, like hook and loop fasteners, detachable clamps or fasteners and/or the like in order to join multiple modules and to form a pressure cushion loading system, in particular an air cushion loading platform.

Preferably, each of the single platform modules can be provided in standardized sizes, like standard EU pallets with a standardized length of e.g. 1200 mm and a width of e.g. 800 mm. Moreover, multiple platform modules can be connectable with each other such that the overall loading system can comprise the size of a standard truck or trailer loading space, the loading space of a shipping container and/or the like, allowing for an easy and efficient loading/unloading process. Furthermore, it is also possible that a single platform module may comprise the size of a standard truck or trailer loading space, the loading space of a shipping container and/or the like.

In a further embodiment, the pressure cushion loading system comprises at least two platform modules each comprising at least one pressurized fluid supply connection means configured to interconnect at least two platform modules to each other, preferably via a pressurized fluid source connection line.

These pressurized fluid source connection line can interconnect the platform modules to each other via the respective supply connection means in order to be able to provide fluid pressure to all pressure cushion elements of and along the system.

The supply connection means and the pressurized fluid source connection line(s) allow for the seamless transfer of pressurized fluid, like pressurized air, between connected platform modules. This ensures consistent and uniform air pressure across all modules in an efficient manner, optimizing the system's stability and performance.

Within the context of the present invention, a pressurized fluid source connection line can be a component that allows fluid flows, like a pressurized airflow, from a pressurized fluid supply source to be forwarded, transferred and distributed to a single or between multiple platform modules. For example, such pressurized fluid source connection line can be (pneumatic) hoses, pipes/tubes, conduits and/or the like, which link supply connection means of a single or multiple platform modules to a pressurized fluid supply source, as well as couplings that allow for platform modules to be quickly connected or disconnected from a pressurized fluid supply source.

In another embodiment, the pressure cushion loading system comprises at least two platform modules comprising electrical connection means configured to electrically connect at least two platform modules to each other.

The electrical connection means allows for the coordinated operation of the system's electrical components across multiple modules. This ensures that the arrangement can be operated and controlled as a unified system, even if single platform modules are added or removed to form the pressure cushion loading system.

According to the present invention, an electrical connection means can be a component that facilitates the electrical connection between different platform modules. For example, such technical implementations can include electrical connectors that link the electrical control systems of multiple platform modules and wires or wiring harnesses that transfer power, control signals and/or sensor signals between the control unit and connected modules in order to control the (fluid) pressure within the pressure cushion elements for crossing the gap.

In a further embodiment, the at least one platform module comprises one or multiple fluid lines configured to interconnect the respective pressure cushion elements.

These fluid/pneumatic lines enable the distribution of pressurized fluid to all pressure cushion elements within a single platform module. Namely, each platform module can comprise fluid/pneumatic lines in order to connect the respective pressure cushion elements with each other, i.e. independently from other ones of the multiple platform modules. This ensures that each pressure/air cushion element maintains the required pressure for supporting the transportation load and to allow for a load transfer across a gap along the ground.

In the context of the present invention, fluid/pneumatic lines can be provided in form of hoses, pipes/tubes, conduits and/or the like for distributing and transferring pressurized fluid, like e.g. compressed air, between different components.

In another embodiment, the at least one pressure cushion element, in particular each of multiple pressure cushion elements, comprises a fluid connector element being configured to connect, at least temporarily, the pressure cushion element to the at least one fluid line.

The fluid connector element allows the air cushion element to be integrated into the overall fluid/pneumatic system. This ensures the controllable flow of pressurized fluid, like e.g. pressurized air, in and out of the pressure cushion element, maintaining the appropriate fluid pressure for (transportation) load support.

Within the context of the present invention, a fluid connector element can be understood as a component that connects the pressure cushion elements to the fluid/pneumatic lines of the respective platform element and thus to the pressurized fluid supply source, in particular via the supply connection means and the pressurized fluid supply source connection line. Examples for such fluid connector element may be magnetically controllable valves by which the inflow and outflow of pressurized fluid from the pressure cushion element can be controlled, quick-connect fluid/pneumatic fittings which allow for temporarily connection of the pressure cushion element to the fluid line of the platform module and/or the like.

According to another aspect of the invention, a method for use of a pressure cushion loading system according to the present invention is provided, in particular for carrying transportation loads across at least one gap within the ground, the method comprising the following steps:
- providing pressurized fluid to the pressure cushion elements of the at least one platform module, in particular via the supply connection means, in a first position remote from a gap within the ground;
- moving the pressure cushion loading system along a second position above the gap;
- disconnecting at least a first pressure cushion element with respect to its fluid connections, in particular by the supply connection means and/from the at least one fluid line of the platform element,
- moving the pressure cushion loading system into a third position beyond the gap;
- reconnecting at least the first pressure cushion element, in particular by the supply connection means and/or to the at least one fluid line of the platform element, in order to allow for providing pressurized fluid to the at least one pressure cushion element.

According to a preferred embodiment the method comprises the further step of:
- determining a decrease of fluid pressure in at least one pressure cushion element,
whereby the step of reconnecting at least the first pressure cushion element is preferably executed when a decrease of fluid pressure is determined in a second pressure cushion element.

A decrease of fluid pressure within at least one pressure cushion element can be evaluated on basis of pressure sensors being provided for each of the pressure cushion elements. Alternatively, pressure sensors may also be provided for a combined set of pressure cushion elements being controllable by the control unit, on basis of interrelationships of pressure loss to be analyzed by the control unit.

Moreover, it may also be possible that a loss of fluid pressure along a fluid connection, e.g. a fluid line or the like, may be determinable on basis of the use rate of pressurized fluid as provided by the pressurized fluid supply source.

Further, in context of the present invention also a single or multiple location sensor(s) may be usable in order to determine a position of the pressure cushion loading system within an area which may allow for a controlled, in particular a predictively and/or anticipatively controlled, closure of fluid connections to specific pressure cushion elements depending from the current position and movement of the system.

The method according to the present invention allows the pressure/air cushion loading system to traverse gaps in the ground while maintaining stability and support for transportation loads.

By controlling the pressure in individual pressure cushion elements, the system ensures that fluid pressure loss in one pressure cushion element does not affect the overall stability, allowing safe transport across uneven surfaces and gaps within such surfaces/the ground.

All of the advantages and technical effects being described in the context of the pressure cushion loading system can also be applied, individually or commonly, for the method according to the present invention.

Further details and advantages of the present invention are explained and described in more detail in the context of the embodiments as illustrated by the enclosed figures.

It is shown:
- Fig. 1: schematic illustration of an embodiment of the pressure cushion loading system;
- Fig. 2: schematic illustration of another embodiment of the pressure cushion loading system; and
- Fig. 3:: flow chart of a method for using a pressure cushion loading system according to Fig. 1 or 2.

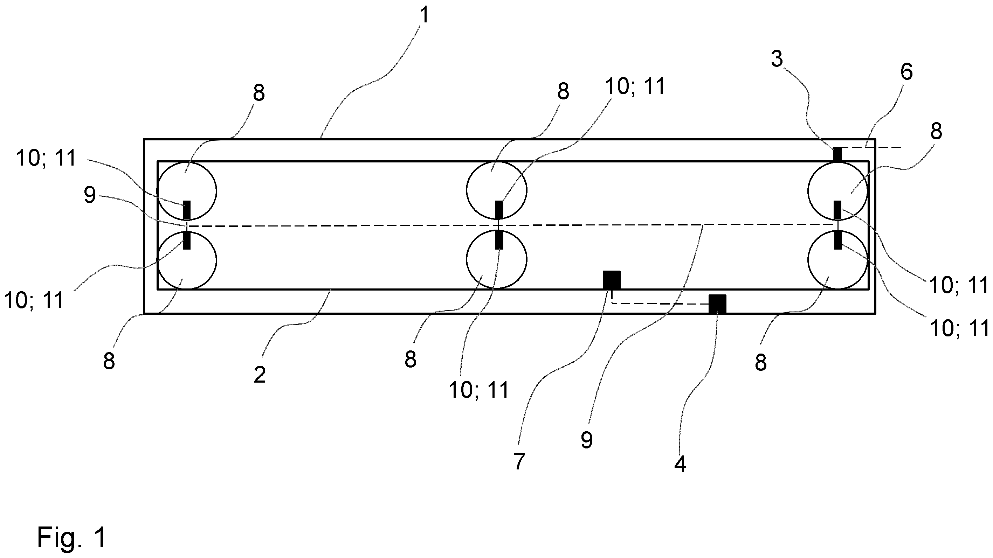

Fig. 1 shows a pressure cushion loading system 1, in particular an air cushion loading system 1, in bottom view.

According to the present invention, pressure cushion element(s) 8 may be inflatable with any fluid, e.g. a liquid as water or, more preferably, with a gaseous fluid as air, nitrogen or the like.

The system comprises a platform module 2, which is supported by at least one pressure cushion element 8. According to Fig. 1 several pressure cushion elements 8 can be provided for the single platform module 2.

The positioning of the various pressure cushion elements 8 along the platform module 2 can vary.

Preferably, the pressure cushion elements 8 are arranged along the platform module 2 in a manner in order to provide an approximately equal load distribution across the platform module 2.

At least two pressure cushion elements 8 may be distributed along the extension of the platform module 2 in such a way to allow for crossing/traversing a gap within the ground/surface or uneven surfaces with only one of the pressure cushion elements being positioned above such gap at a time.

A pneumatic supply connection means 3 is provided to control the pressure fluid flow to the respective platform module 2 and thus to the cushion element(s) 8.

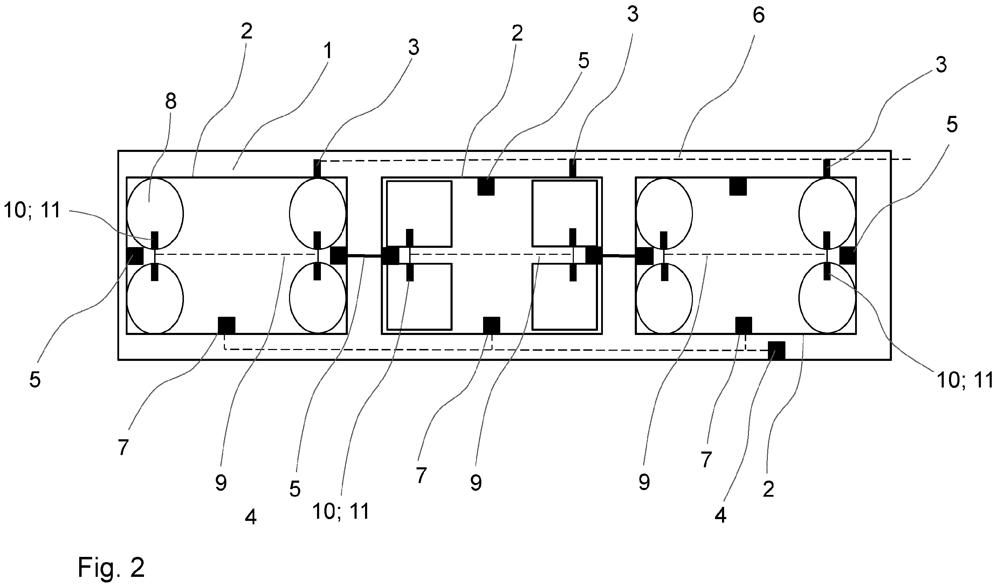

The system 1 further comprises at least one pressurized fluid/pneumatic source connection line 6 for connection to an external or internal pressurized fluid source (not shown in Fig. 1 and 2), like e.g. a reservoir, a compressor and/or the like.

Pressurized fluid, like e.g. compressed air, can be forwarded from a pressurized/compressed fluid source via the fluid source connection line 6, such as tubes, hoses and/or the like, and the pneumatic supply connection means 3 to the platform module 2.

According to Fig. 1 each of the pressure cushion elements 8 may be provided with a fluid/pneumatic connector element 10. Further, each pressure cushion element 8 can comprise a pressure reduction means 11. Fluid connector elements 10 and pressure reduction means 11 can be provided separately from each other or combined, preferably integrated, into each other, respectively.

The fluid connector elements 10 of multiple pressure cushion elements 8 of a platform module 2 can be connected with each other via one or multiple fluid/pneumatic lines 9.

Thus, pressurized/compressed fluid can be delivered via the supply connection means 3 to the fluid line(s) of the platform module 2 and distributed to the several pressure cushion elements 8. Thus, each and every pressure cushion element 8 can be provided with pressurized/compressed fluid according to the fluid connector element being controlled to be in an open state or closed state.

Alternatively, the supply connection means 3 can be connected to at least one pressure cushion element 8, as indicated in Fig. 1, whereby pressurized/compressed fluid is transferred via such pressure cushion element 8 and the corresponding fluid connector element 10 into the fluid line(s) 9 for the rest of the pressure cushion elements 8.

When a fluid pressure within one of the pressure cushion elements 8 exceeds a maximum pressure threshold, such pressure can be reduced in a controlled and/or regulated manner via the respective pressure reduction means 11, like e.g. a pressure relief valve.

A control unit 4 is configured to control and/or regulate the fluid pressure, e.g. the air pressure, within the pressure cushion elements 8, in particular by being connected (shown Fig. 1 and 2 schematically) to the at least one supply connection means 3, the fluid connector element(s) 10 and/or the pressure reduction means 11.

Supply connection means 3, the fluid connector element(s) 10 and/or the pressure reduction means 11 can be provided as controllable valves, like e.g. magnetic valves, automatic or semi-automatic relief valves or the like.

In particular, the control unit 4 can be connected to a single platform module 4 via a respective electrical connector 7. Electrical control signals may be distributable from the electrical connector 7 to the different elements and means of the platform module 2 to be controlled by the control unit 4. This allows for a modular pressure cushion load system 1 which can also be extended by further platform modules 2.

The system can reduce or increase the pressure in the air cushion element 8 as needed to carry transportation loads over a gap in the ground and/or along uneven surfaces.

The air cushion system 1 can cause a significant reduction of the time being required to load and unload trucks, compared to conventional methods. This leads to an improved ratio of driving time to idle time for the truck. The compact and flat design of the air cushion loading system 1 further allows for greater loading volume.

Fig. 2 illustrates the air cushion loading system 1 with three interconnected platform modules 2.

In particular, each of the platform modules 2 comprises at least one mechanical connection means 5 and an electrical connection means 7.

The system 1 comprises multiple platform modules 2 connected with each other by the mechanical connection means 5. The mechanical connection means 5 are provided in corresponding manner allowing for a sufficient mechanical interaction with each other.

The supply connection means 3 may link the platform modules 2 hydraulically/pneumatically, while the electrical connection means 7 establish an electrical connectivity between the platform modules 2.

The pneumatic supply connection means 3, the fluid connector means 10 and/or the pressure reduction means 11 may be controllable to supply pressurized fluid to the pressure cushion elements 8.

The fluid line(s) 9 may connect the pressure cushion elements 8, each of which being equipped with fluid connector elements 10 for controlling the fluid flow, e.g. the airflow.

This pressure cushion loading system's 1 configuration enables the platform modules 2 to work together in a controlled manner, for transporting loads across a surface.

The pressure cushion loading system 1 can be loaded directly at the storage location of the goods, enabling more efficient logistics. The loaded system 1 can be transported through narrow and tight spaces with flexibility, including tight turns and movement in any direction, as well as rotation in place. The low friction allows movement of the transportation load using small forces, whether pushed manually or with the help of a suitable pushing devices.

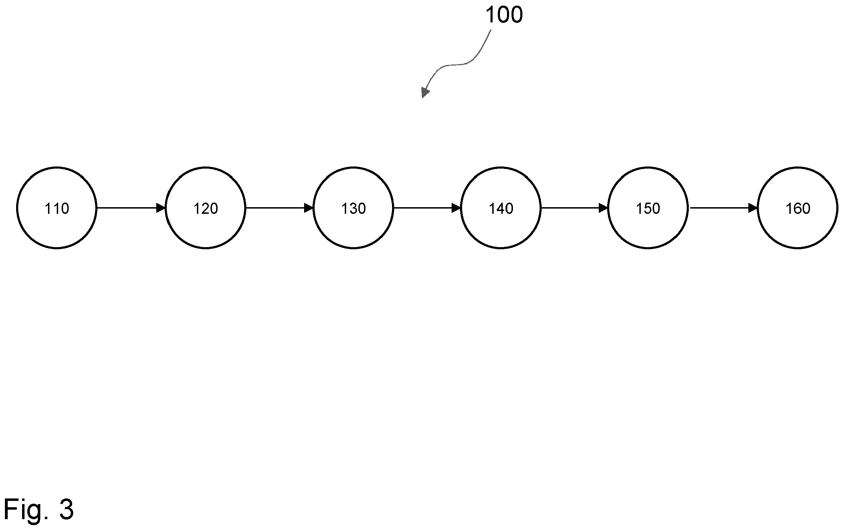

Fig. 3 illustrates a method 100 for carrying transportation loads over gaps within the ground.

In a first step pressurized fluid is provided 110 to the pressure cushion elements 8 of the at least one platform module 2, in particular via the supply connection means 3, in a first position remote from a gap within the ground.

In a next step, the pressure cushion loading system 1 can be moved 120 along a second position above the gap.

Preferably, when a decrease of fluid pressure in at least a first pressure cushion element 8 is determined 130, at least a first pressure cushion element 8 is disconnected 140 with respect to its fluid connections, in particular by the supply connection means 3 and/or from the at least one fluid line 9 of the platform element 2.

Such decrease of fluid pressure within a pressure cushion element 8 can be evaluated on basis of pressure sensors being provided for each of the pressure cushion elements 8. Alternatively, pressure sensors may also be provided for a combined set of pressure cushion elements 8 being controllable by the control unit 4, on basis of interrelationships of pressure losses to be analyzed by the control unit 4.

Moreover, it may also be possible that a loss of fluid pressure along a fluid connection, e.g. a fluid line or the like, may be determinable on basis of the use rate and/or efficiency rate of pressurized fluid being used and as provided by the pressurized fluid supply source.

Further, in context of the present invention, also a single or multiple location sensor(s) may be usable in order to determine a position of the pressure cushion loading system 1 within an area which may allow for a controlled, in particular a predictively and/or anticipatively controlled, closure of fluid connections to specific pressure cushion elements 8 depending from the current position and movement direction of the system 1.

The pressure cushion loading system 1 can be further moved 150 into a third position beyond the gap, in particular while a decrease of fluid pressure in at least the first pressure cushion element 8 takes place and/or the first pressure cushion element 8 is pneumatically/hydraulically disconnected.

In a further step, at least the first pressure cushion element is reconnected 160, in particular by the supply connection means 3 and/or to the at least one fluid line 9 of the platform element 2, in order to allow for providing pressurized fluid to the at least one first pressure cushion element 8.

Preferably, the step of reconnecting 160 at least the first pressure cushion element 8 is executed when a decrease of fluid pressure is determined in a second pressure cushion element 8.

The use of air cushion elements allows for smooth transport of loaded platforms, even over gaps, with minimal friction. The force being required to move the transportation load is reduced. The overall loading and unloading time for trucks is minimized and the number of loading bays required in the factory or logistics centre can be reduced.

In summary, by the present invention a pressure cushion loading platform 1 and method 100 for use of such system 1 is provided, allowing for efficient loading and unloading of utility/transportation vehicles, like trucks, using pressure cushion technology.

In particular, the invention solves the challenges of reducing loading times and minimizing vehicle idle time while ensuring the safe handling of goods.

### REFERENCE SIGNS

- 1: Pressure/air cushion loading system
- 2: Platform module
- 3: Supply connection means
- 4: Control unit
- 5: Mechanical connection means
- 6: Pressurized fluid/pneumatic source connection line
- 7: Electrical connection means
- 8: Pressure/air cushion element
- 9: Fluid/pneumatic lines
- 10: Fluid/pneumatic connector element
- 11: Pressure reduction means
- 100: Method for use of a pressure cushion loading system
- 110: Providing pressurized fluid to the pressure cushion elements
- 120: Moving the pressure cushion loading system along a second position
- 130: Determining a decrease of fluid pressure in at least a first pressure cushion element
- 140: Disconnecting at least a first pressure cushion element
- 150: Moving the pressure cushion loading system into a third position
- 160: Reconnecting at least the first pressure cushion element with the supply connection means

## Claims

1. Pressure cushion loading system (1), preferably air cushion loading system, in particular for use with a utility vehicle, comprising:
- at least one pressure cushion element (8), in particular air cushion element;
- at least one platform module (2) configured to receive transportation loads, wherein the at least one platform module (2) is supported by the at least one pressure cushion element (8);
- at least one supply connection means (3) configured to provide pressurized fluid, in particular pressurized air, to the at least one pressure cushion element (8);
- at least one control unit (4),
wherein the control unit (4) is configured to control a fluid pressure within the at least one pressure cushion element (8), preferably by controlling and/or regulating the supply connection means (3), such that the system (1) is capable of carrying transportation loads over at least one gap within the ground.

2. Pressure cushion loading system (1) according to claim 1,
**characterized in that**
the at least one pressure cushion element (8) comprises at least one pressure reduction means (11), in particular a pressure reduction valve.

3. Pressure cushion loading system (1) according to any of the preceding claims,
**characterized in that**
the control unit (4) is configured to control the fluid pressure until the at least one pressure cushion element (8) reaches a minimum or maximum fluid pressure threshold, in particular a pre-determinable minimum or maximum fluid pressure threshold, even more preferably a pre-determinable minimum or maximum fluid pressure threshold according to a respective load weight and/or load weight distribution along the at least one platform module (2).

4. Pressure cushion loading system (1) according to any of the preceding claims,
**characterized in that**
the pressure cushion loading system (1) comprises at least two platform modules (2), each comprising at least one connection means (5), preferably a mechanical connection means, configured to detachably connect at least two platform modules (2) to each other.

5. Pressure cushion loading system (1) according to any of the preceding claims,
**characterized in that**
the pressure cushion loading system (1) comprises at least two platform modules (2) each comprising at least one supply connection means (3) configured to interconnect at least two platform modules (2) to each other, preferably via a pressurized fluid source connection line (6).

6. Pressure cushion loading system (1) according to any of the preceding claims,
**characterized in that**
the pressure cushion loading system (1) comprises at least two platform modules (2) comprising electrical connection means (7) configured to electrically connect at least two platform modules (2) to each other.

7. Pressure cushion loading system (1) according to any of the preceding claims,
**characterized in that**
the at least one platform module (2) comprises one or multiple fluid lines (9) configured to interconnect the respective pressure cushion elements (8).

8. Pressure cushion loading system (1) according to claim 7,
**characterized in that**
the at least one pressure cushion element (8), in particular each of multiple pressure cushion elements (8), comprises a fluid connector element (10) being configured to connect, at least temporarily, the pressure cushion element (8) to the at least one fluid line (9).

9. Method (100) for use of a pressure cushion loading system (1) according to one of the preceding claims, in particular for carrying transportation loads across at least one gap within the ground, the method comprising the following steps:
- providing (110) pressurized fluid to the pressure cushion elements (8) of the at least one platform module (2), in particular via the supply connection means (3), in a first position remote from a gap within the ground;
- moving (120) the pressure cushion loading system (1) along a second position above the gap;
- disconnecting (140) at least a first pressure cushion element (8) with respect to its fluid connections, in particular by the supply connection means and/or from the at least one fluid line (9) of the platform element (2),
- moving (150) the pressure cushion loading system (1) into a third position beyond the gap;
- reconnecting (160) at least the first pressure cushion element (8), in particular by the supply connection means (3) and/or to the at least one fluid line (9) of the platform element (2), in order to allow for providing pressurized fluid to the at least one pressure cushion element (8).

10. Method (100) according to claim 9,
**characterized in that**
the method comprises the further step of:
- determining (130) a decrease of fluid pressure in at least a first pressure cushion element (8),
whereby the step of reconnecting (160) at least the first pressure cushion element (8) is preferably executed when a decrease of fluid pressure is determined in a second pressure cushion element (8).
